# EUROPÄISCHE PATENTANMELDUNG

(11) **EP 2 636 436 A1**
(43) Veröffentlichungstag der Anmeldung: **11.09.2013**
(21) Anmeldenummer: 12001584.7
(22) Anmeldetag: 08.03.2012
(51) Int. Cl.: B01D 33/044, B01D 33/073, B01D 33/62, B01D 33/64, B01D 33/66

(54) **Verfahren und Vorrichtung zum Bilden und Entfeuchten eines porösen Filterkuchens**

(71) Anmelder: BOKELA Ingenieurgesellschaft für Mechanische Verfahrenstechnik mbH, 76131 Karlsruhe (DE)
(72) Erfinder: Bott, Reinhard, Dr., 76337 Waldbronn (DE); Langeloh, Thomas, Dr., 69126 Heidelberg (DE); Ehrfeld, Egon, 76227 Karlsruhe (DE); Neumaier, Klaus, 76137 Karlsruhe (DE)
(74) Vertreter: Wunderlich, Rainer

(57) **Zusammenfassung**

Die Erfindung betrifft ein Verfahren zum Bilden und Entfeuchten eines porösen Filterkuchens, bei dem der Filterkuchen aus Feststoffpartikeln aus einer Suspension auf einem Filtermedium gebildet und anschließend der Filterkuchen auf dem Filtermedium auf der vom Filtermedium abgewandten Seite zum Entfernen von Restfeuchte mit einem Entfeuchtungsfluid beaufschlagt wird. Dabei wird vor oder bei Beaufschlagung des Entfeuchtungsfluides mindestens ein Kraftübertragungselement an den Filterkuchen angelegt, wobei in dem Filterkuchen eine definierte mechanische Spannung erzeugt wird, welche einer Rissbildung im Filterkuchen entgegenwirkt.

## Beschreibung

Die Erfindung betrifft ein Verfahren zum Bilden und Entfeuchten eines porösen Filterkuchens, bei dem der Filterkuchen aus Feststoffpartikeln aus einer Suspension auf einem Filtermedium gebildet und anschließend der Filterkuchen auf dem Filtermedium auf der vom Filtermedium abgewandten Seite zum Entfernen von Restfeuchte mit einem Entfeuchtungsfluid beaufschlagt wird. Die Erfindung betrifft weiterhin eine Vorrichtung zur Durchführung dieses Verfahrens.

Die kuchenbildende Filtration wird beispielsweise beim Aufbereiten von Rohstoffen, wie Erzen, Kohle und so weiter, sowie in vielfältiger Weise bei der Abtrennung von Feststoffpartikeln aus Suspensionen oder zur Gewinnung eines Filtrates eingesetzt. Neben der Rohstoffgewinnung liegen Einsatzbereiche in der Nahrungsmittelindustrie, der Kunststoffindustrie, der Pharmazie, der Abwasserbehandlung und vielen weiteren Bereichen.

Aufgrund einer anliegenden Druckdifferenz bildet sich eine Strömung von Flüssigkeit durch ein Filtermedium, beispielsweise ein Filtergewebe oder eine Filtermembran, aus, wobei sich Feststoffpartikel als Haufwerk an der Anströmseite des Filtermediums anlagern. Dieses Haufwerk aus Feststoffpartikeln, welches üblicherweise als Filterkuchen bezeichnet wird, weist zwischen den einzelnen Feststoffpartikeln Freiräume oder Poren auf, welche mit Flüssigkeit gefüllt sind.

In vielen Fällen ist es gewünscht, nach Abschluss der kuchenbildenden Filtration den gebildeten Filterkuchen weiter zu entfeuchten, um etwa weiteres Filtrat zu gewinnen oder einen Feststoff mit möglichst geringer Restfeuchte zu erhalten.

Für eine Entfeuchtung des Filterkuchens ist es bekannt, diesen noch auf dem Filtermedium nach der kuchenbildenden Filtration mit einem Entfeuchtungsfluid, das heißt einer anderen Flüssigkeit oder einem Gas, insbesondere Luft, zu beaufschlagen. Durch eine anliegende Druckdifferenz strömt das Entfeuchtungsfluid nach Überwinden des Kapillardruckes in den Poren des Filterkuchens durch das Haufwerk, wobei die Porenflüssigkeit in Richtung auf das Filtermedium ausgetrieben wird.

Nach Überwinden des Kapillardruckes und der Verdrängung von Porenflüssigkeit durch das Entfeuchtungsfluid entstehen zwischen den Partikeln des Haufwerks Zugspannungen, die vorzugsweise durch die Oberflächenspannung an der 3-Phasengrenze "Porenflüssigkeit-Feststoff-Entfeuchtungsfluid" verursacht werden. Diese Zugspannungen führen zu einem Schrumpfen des Haufwerks. Sind diese Zugspannungen zu groß und können diese Zugspannungen nicht mehr durch ein Schrumpfen abgebaut werden, dann neigt das Haufwerk dazu, die Zugspannungen durch Rissbildung zu kompensieren. Die Risse können sich je nach Haufwerk nur an der Oberfläche ergeben oder sie reichen bis zum Filtermedium. Sobald sich ein Riss von der Oberseite des Filterkuchens bis zum unten liegenden Filtermedium erstreckt, besteht das Problem, dass sich eine sogenannte Bypass-Strömung von Entfeuchtungsfluid durch den Riss hindurch einstellt. Je mehr und je stärker sich eine derartige Bypass-Strömung durch Risse ausbildet, umso größer wird der notwendige Energieaufwand, um das Druckpotenzial zur weiteren Kuchenentfeuchtung zwischen dem Filtratraum und der Filterkuchenoberseite aufrecht zu erhalten, und umso höher ist der Verbrauch an Entfeuchtungsfluid. Ab einem bestimmten Maß von Rissen und Bypass-Strömungen ist der zusätzliche Aufwand nicht mehr wirtschaftlich, so dass eine solche Entfeuchtung nicht weiter wirtschaftlich fortgesetzt werden kann. Zur weiteren Entfeuchtung muss dann häufig eine thermische Nachbehandlung erfolgen, welche energie- und damit kostenaufwändig ist. In besonders drastischen Fällen der Schrumpfung kann der Filterkuchen neben der Rissbildung dazu neigen, sich als Scholle vom Filtermedium zu lösen und am Schollenrand abzuheben, so dass sogar die Durchströmungsfläche reduziert wird.

Der während der Entfeuchtungszeit durch den Kuchen strömende Volumenstrom des Entfeuchtungsfluids ist ein Maß für die Wirtschaftlichkeit des Filtrationsverfahrens. Zur Erhöhung der Wirtschaftlichkeit wird in der DE 36 29 805 C2 gelehrt, als Filtermedium eine feinporige Membran vorzusehen. Dabei wird der Differenzdruck gemäß diesem Verfahren derart eingestellt, dass er größer als der kapillare Eintrittsdruck des Filterkuchens und höchstens gleich dem kapillaren Eintrittsdruck der Membran ist. Bei diesem Verfahren wird also trotz Rissbildung eine Durchströmung durch die feinen Poren der Membran begrenzt. Bei stark schrumpfenden Filterkuchen zeigt der gerissene Kuchen jedoch wegen der glatten Membranoberfläche häufig den Schollenablöseeffekt.

Dieses bekannte Verfahren bedingt jedoch zwingend den Einsatz einer feinporigen Membran als Filtermedium, welche empfindlich und kostenaufwändig ist. Diese kann nicht für alle Einsatzbereiche verwendet werden.

Aus der DE 42 38 087 C3 geht ein Verfahren und eine Vorrichtung zur mechanischen Entfeuchtung eines Filterkuchens hervor. Dabei wird zur Kuchenentfeuchtung eine gasförmige Phase einer Flüssigkeit eingesetzt, deren Druck und Temperatur derart eingestellt sind, dass das Behandlungsfluid in einem schmalen Bereich des Filterkuchens eine Kondensationsfront bildet. Dabei durchwandert diese Kondensationsfront den Filterkuchen zum Filtermedium hin und treibt Porenflüssigkeit aus dem Filterkuchen aus. Durch die Kondensatbildung wird das physiko-chemische Regime an der 3-Phasengrenzlinie beeinflusst, was einerseits die Rissbildungswahrscheinlichkeit reduzieren, aber auch vergrößern kann.

Die Verwendung eines Dampfes ist jedoch in jedem Fall energieaufwändig und kann z.B. nicht bei temperaturempfindlichen Feststoffpartikeln eingesetzt werden.

Der Erfindung liegt die **Aufgabe** zugrunde, ein Verfahren und eine hierfür einsetzbare Vorrichtung anzugeben, mit welchen eine gute und zugleich wirtschaftliche Entfeuchtung eines zur Rissbildung neigenden Filterkuchens erreicht werden kann.

Die Aufgabe wird nach der Erfindung durch ein Verfahren mit den Merkmalen des Anspruchs 1 gelöst. Hierzu vorgesehene Vorrichtungen sind Gegenstand der Patentansprüche 15 bis 17. Bevorzugte Ausführungen sind in den jeweils abhängigen Ansprüchen angegeben.

Das erfindungsgemäße Verfahren ist dadurch gekennzeichnet, dass vor oder bei Beaufschlagung des Entfeuchtungsfluides das Haufwerk so in seiner Struktur beeinflusst wird, dass die beim Porenentleerungsvorgang entstehenden Zugspannungen aufgefangen bzw. kompensiert werden können, so dass sich keine Rissbildung ergibt. Die Beeinflussung der Haufwerksstruktur erfolgt vorzugsweise durch mindestens ein an den Filterkuchen angelegtes Kraftübertragungselement, wobei in dem Filterkuchen eine definierte mechanische Spannung erzeugt wird, welche einer Rissbildung im Filterkuchen entgegenwirkt. Die Struktur des Haufwerkes kann auch durch in den Filterkuchen eingelagerte Elemente erfolgen, die bewirken, dass die beim Porenentleerungsvorgang entstehenden Zugspannungen aufgefangen bzw. kompensiert werden.

Ein Grundgedanke der Erfindung liegt darin, einem Entstehen von Rissen im Filterkuchen bei der Entfeuchtung von Anfang an durch Einprägen einer Druckspannung entgegenzuwirken. Je weniger und je später Risse entstehen, umso geringer ist die Bypass-Strömung. Mit einer Absenkung der Bypass-Strömung reduziert sich auch der Verbrauch an Entfeuchtungsfluid und der Energieaufwand, welcher zur Aufrechterhaltung des Druckniveaus des Entfeuchtungsfluides notwendig ist.

Nach der Erfindung wird vorzugsweise vor oder bei Beaufschlagung des Entfeuchtungsfluides mindestens ein Kraftübertragungselement an den Filterkuchen angelegt oder in den Filterkuchen eingelagert in der Weise, dass in dem Filterkuchen eine definierte Spannung zumindest in Wechselwirkung mit dem beaufschlagten Filterkuchen erzeugt wird, wobei hierdurch eine Rissbildung innerhalb des Filterkuchens entgegengewirkt wird. In einer weiteren erfindungsgemäßen Variante wird die zur Vermeidung der Rissbildung erforderliche Vorspannung im Haufwerk dadurch erzeugt, dass die Filteroberfläche konkav nach innen gerichtet wird, wodurch im Haufwerk eine zum Zentrum der konkaven Vertiefung gerichtete Druckspannung erzeugt wird (Effekt des römischen Torbogens).

Die Erfindung beruht dabei auf der Erkenntnis, dass es bei der Entfeuchtung des Filterkuchens aufgrund der Entleerung der Zwischenräume in dem Haufwerk aus Feststoffpartikeln zu Schrumpfungsvorgängen kommt. Beim Flüssigkeitsentzug aus dem Filterkuchen und der daraus resultierenden Schrumpfung des Haufwerkes entstehen Zugspannungen im Partikelgerüst (Haufwerksgerüstdruck). Diese bilden sich bereits vor einer Untersättigung und dann insbesondere während der Untersättigung infolge der dabei wirksamen Kapillarkräfte aus.

Die in der Kuchenstruktur vorhandene Verteilung der Porengrößen führt zu einer entsprechenden Kapillardruckverteilung und daraus resultierend zu einer Zugspannungsverteilung. Infolge der Zugspannungsverteilung lagern sich Feststoffpartikel bei entsprechender Beweglichkeit um und der Kuchen schrumpft. Während des Schrumpfens entsteht ein Riss örtlich dort, wo die Zugkraft die Haftkraft zwischen den Partikeln übertrifft. Der Riss breitet sich aus, bis die inneren Spannungen im Kuchen abgebaut sind.

Durch Anlegen der erfindungsgemäßen Kraftübertragungselemente an oder in den Filterkuchen können hierdurch die sich ausbildenden Spannungen im Filterkuchen zumindest teilweise aufgenommen werden. Das Partikelgerüst wird stabilisiert, so dass eine Rissbildung vermieden, verzögert oder erheblich reduziert wird.

Eine bevorzugte Ausführungsform der Erfindung besteht darin, dass als Kraftübertragungselement eine Walze oder ein Band eingesetzt wird, die an der Oberfläche profiliert und strukturiert sein kann. Dabei wird das Kraftübertragungselement an der Oberseite des gebildeten Filterkuchens angelegt. Hierdurch kann eine Kraft senkrecht und/oder parallel zum Filtermedium auf den Filterkuchen aufgebracht werden. Die hierdurch einleitbaren Kräfte können die bei der Entfeuchtung entstehenden Zugspannungen aufnehmen oder derart überlagern, dass es zu einer gezielten Schrumpfung des Filterkuchens ohne oder mit deutlich reduzierter Rissbildung kommt.

Eine bevorzugte Weiterbildung der Erfindung liegt dabei darin, dass die Walze oder das Band strukturierte Vorsprünge aufweist, durch welche Einprägungen in dem Filterkuchen erzeugt werden. Die Walze oder das Band können insbesondere vorspringende Noppen oder Stege aufweisen, welche in dem Filterkuchen örtlich begrenzte Einprägungen hervorrufen. Es werden in dem Filterkuchen somit in bestimmten Bereichen durch diese Einprägungen Vorspannungen und Haufwerksinhomogenitäten erzeugt. Im Verlauf der Entfeuchtung und der Schrumpfung des Filterkuchens können diese Vorspannungen, welche insbesondere Druckspannungen sind, auftretende Zugspannungen kompensieren, so dass sich keine oder erst vorzögert und/oder im verringerten Maße Risse im Filterkuchen ausbilden. Es können die Stege als gitterförmige Struktur angeordnet sein, wobei die gitterförmigen Einprägungen Felder im Filterkuchen umschließen. Abhängig vom Filterkuchen ist die Feldgröße so gewählt, dass ein freies Schrumpfen des Feldes ohne Rissbildung erreicht wird. Die Feldgröße eines umschlossenen Segmentes ist also kleiner als die charakteristische Rissfeldgröße. Ein vergleichbarer Effekt wird erreicht, wenn während der Haufwerksbildung oder unmittelbar danach dauerhaft in den Filterkuchen eingelagerte Elemente die entsprechenden Zugspannungen aufnehmen. Diese Elemente können netzartige Strukturen haben oder Fäden oder dergleichen sein.

Grundsätzlich kann das erfindungsgemäße Verfahren in unterschiedlichsten Filtrationsvorrichtungen eingesetzt werden, insbesondere auch bei diskontinuierlich arbeitenden Filtern, etwa Nutschenfiltern oder Filterpressen. Besonderes vorteilhaft ist es nach der Erfindung, dass das Filtermedium bewegt wird und zumindest einen Filtrationsbereich und einen Entfeuchtungsbereich durchläuft. Somit kann das Verfahren insbesondere bei kontinuierlich arbeitenden Filtern eingesetzt werden, etwa Bandfiltern, Trommelfiltern und Scheibenfiltern. Derartige kontinuierlich arbeitende Filter ermöglichen eine besonders wirtschaftliche Filtration und Entfeuchtung.

Eine gute Kraftübertragung oder Stabilisierung des Filterkuchens an seiner Oberseite wird nach der Erfindung dadurch erreicht, dass im Entfeuchtungsbereich das Band an dem Filterkuchen anliegt und für den Anwendungsfall eines Drehfilters zumindest bereichsweise an dem Filterkuchen mit bewegt wird. Das Band kann dabei permeabel oder impermeabel ausgebildet sein. Hierdurch kann über eine relativ große Fläche ein Kontakt zum Filterkuchen erreicht werden. In diesem Kontaktbereich können Anpress- und/oder Scherkräfte auf den Filterkuchen zur Erzeugung der gewünschten mechanischen Spannungen ausgeübt werden. Grundsätzlich ist es auch möglich, dass das Band mit relativ geringer Kraft an der Oberseite des Filterkuchens anliegt, die Oberseite stabilisiert und so einer unerwünschten durch kapillare Zugspannungen verursachte Verlagerung der oberflächennahen Feststoffpartikel entgegenwirkt. Hierdurch wird der Entstehung und Ausbreitung von Rissen von der Oberseite des Filterkuchens besonders effizient vorgebeugt.

Eine weitere Variante der Erfindung besteht darin, dass die Walze oder das Band zum Erzeugen einer Scherspannung, die wiederum eine Vorspannung in den Kuchen einprägt, parallel zum Filterkuchen in einem Kontaktbereich zum Filterkuchen mit einer vom Filterkuchen abweichenden Geschwindigkeit bewegt werden. Auf diese Weise wird im Kontaktbereich an der Oberseite des Filterkuchens eine Scherspannung parallel zum Filterkuchen erzeugt. Durch diese Scherspannungen werden einerseits Druckspannungen in den Filterkuchen eingeprägt, die der Rissbildung entgegenwirken und andererseits beim Entstehen erster Aufrisse bei der Entfeuchtung oberflächennahe Feststoffpartikel verlagert und die sich so bildenden Öffnungen wieder zugesetzt.

Eine weitere Form der Einbringung einer Spannung zwecks Reduzierung von Rissbildung besteht erfindungsgemäß darin, dass der Kuchen durch ein Kraftübertragungselement normal oder vorzugsweise unter einem bestimmen Winkel zur Kuchenoberfläche eingeschnitten wird. Dadurch wird erreicht, dass gezielt Flüssigkeitsbrücken zwischen Partikeln und die Haufwerksstruktur zerstört werden und so die bei der Schrumpfung des Kuchens auftretenden Zugspannungen verringert werden. Der erzeugte Einschnitt kann sich, insbesondere wenn er unter einem bestimmten Winkel zur Kuchenoberfläche ausgeführt wird, sofort wieder schließen und das Haufwerk sich mit geringerer Porosität neu formieren. Ein Kraftübertragungselement kann eine mit Klingen versehene Walze oder eine oder mehrere über der Kuchenoberfläche stehende oder oszillierende Klingen sein. Ebenso kann der Kuchen durch feine Hochdruckfluidstrahlen (oszillierend oder stehend) eingeschnitten werden, um die gewünschte Wirkung zu erzielen (vgl. Schneidetechniken mit Wasser in der Medizin-und Formgebungstechnik). In gleicher Weise kann auch hochenergetisches Licht (Laser) eingesetzt werden.

Eine weitere bevorzugte Ausführungsform der Erfindung besteht darin, dass das Band strukturiert und permeabel ausgebildet ist und an der dem Filtermedium abgewandten Seite des Filterkuchens aufgelegt und noch während des Bildens des Filterkuchens in diesem bereits teilweise ausgeformten Filterkuchen angeordnet wird. Es wird also ein Kraftübertragungselement innerhalb des Filterkuchens ausgebildet, wobei die Anordnung dieses Elementes schon während der Filterkuchenbildung erfolgt, wodurch einerseits besonders vorteilhaft Druckspannungen in dem sich bildenden Haufwerk aufgebaut werden und andererseits das Kraftübertragungselement in den Kuchen integriert wird, so dass die gegebenenfalls entstehenden Zugspannungen im Fall von Rissbildung unmittelbar durch die induzierten Druckspannungen kompensiert werden. Nach dem Anfiltrieren einer ersten Kuchenschicht erfolgt somit nach Anordnung des Bandes ein weiteres Anlagern des Filterkuchens um das aufgelegte Band herum. Hierdurch können dann unmittelbar Kräfte innerhalb des Filterkuchens vom Band auf den Filterkuchen oder in umgekehrter Weise übertragen werden. Es können somit die inneren Spannungen im Filterkuchen unmittelbar beeinflusst werden.

Eine weitere vorteilhafte Möglichkeit der Erfindung besteht darin, dass das Filtermedium mit konkaven Vertiefungen versehen wird. Hierdurch kann eine Segmentierung der Filterfläche erfolgen. Wenn das Filtermedium durch Segmentierung in Flächen aufgeteilt wird, die kleiner sind, als die jeweilige Rissfeldgröße, so können sich kleine Teil-Filterkuchen bilden, die bei der Entfeuchtung frei schrumpfen können, ohne einen Riss auszubilden.

Bei einem Schrumpfen des Filterkuchens werden auf Grund der vorgeprägten Haufwerksgestaltung und der dadurch eingeprägten Druckspannung durch die konkaven Ausgestaltungen von Filtermediumbereichen Feststoffpartikel beim Auftreten von Spannungen veranlasst, sich gezielt von den Rändern zum Zentrum einer konkaven Scholle zu bewegen, was ebenfalls dem Auftreten von Rissen entgegenwirkt.

Ein guter Spannungsabbau innerhalb des Filterkuchens wird erfindungsgemäß auch dadurch bewirkt, dass der Filterkuchen beim Entfeuchten ganz oder teilweise (z.B. an der Kuchenoberfläche) in Schwingung versetzt wird, wodurch mikroskopisch sowohl Zug- als auch Druckspannungen erzeugt werden, die die schrumpfungsbedingten Zugspannungen aufnehmen. Durch diese Schwingung oder Vibration werden Feststoffpartikel verstärkt dazu veranlasst energetisch günstigere Positionen innerhalb des Feststoffgerüstes einzunehmen. Durch diese Schwingungen oder Vibrationen werden interne Zugspannungen bereits in einem frühen Stadium abgebaut, was ebenfalls der Rissbildung vorbeugt. Die Schwingungen und Vibrationen werden vorteilhafterweise durch das Kraftübertragungselement in den Filterkuchen eingebracht. Hierbei können entweder das ganze Kraftübertragungselement oder nur die strukturierten Oberflächenprofile verwendet werden.

Vorteilhaft ist es nach einer weiteren Variante der Erfindung, dass der Filterkuchen beim Entfeuchten mit einer Strahlung beaufschlagt wird. Die Strahlung kann dabei beginnen von Ultraschall über Infrarot- und ultravioletter Strahlung bis hin zu hochenergetischer Strahlung, etwa Röntgenstrahlung oder radioaktiver Bestrahlung. Während Ultraschallwellen einen Effekt wie bei den vorher beschriebenen Vibrationen erzeugen, können Infrarot- und/oder ultraviolette Strahlen die Temperatur zwischen den Partikeln erhöhen, so dass ein Verdampfen der Restflüssigkeit bewirkt wird und dies zu einer Reduzierung der die Zugkräfte verursachenden Oberflächenspannung führt und in einigen Fällen auch elektrostatische- oder Van-der-Waal-Kräfte in günstiger Weise beeinflussen. Letztere Kräfte können auch durch die beschriebene hochenergetische Strahlung in positiver Weise verändert werden, wobei etwa eine gewünschte Ionisierung innerhalb des Filterkuchens erzielt werden kann.

Eine weitere Möglichkeit der Beeinflussung dieser Spannungen im Filterkuchen wird nach der Erfindung dadurch erreicht, dass der Filterkuchen beim Entfeuchten mit einem magnetischen und/oder elektrischen Feld beaufschlagt wird. Die magnetischen und/oder elektrischen Felder erzeugen im Filterkuchen auf Grund des Dipolcharakters von Feststoffpartikeln und von Wasser ein Spannungsfeld. Auch hierdurch können die elektromagnetischen Wechselwirkungen zwischen einzelnen Feststoffpartikeln bei der Entfeuchtung in günstiger Weise beeinflusst werden, so dass die Rissbildung eingeschränkt oder unterbunden wird.

Eine weitere bevorzugte Ausgestaltung der Erfindung liegt darin, dass beim Bilden des Filterkuchens ein Filterkuchenhilfsstoff zur Spannungsreduzierung beigegeben wird. So ist der Zusatz von Chemikalien in die Suspension oder auf dem Filterkuchen möglich, um die Oberflächeneigenschaften von Feststoff und/oder Flüssigkeit oder die Koagulationseigenschaften zu ändern. Weiter können auch bei der Kuchenbildung Fasern, Grobkorn oder sonstige Füllstoffe zur Verbesserung des Partikelzusammenhaltes beziehungsweise zur Verminderung der Kompressibilität des Filterkuchens eine wirksame Maßnahme, um entstehende Zugspannungen aufzunehmen bzw. die übertragbare Schubspannung im Filterkuchen zu erhöhen.

Die eingangs genannte Aufgabe wird hinsichtlich einer Vorrichtung dadurch gelöst, dass zur Einbringung von Vorspannungen in den Filterkuchen zumindest ein Kraftübertragungselement vorgesehen ist, welches an dem Filterkuchen zum Erzeugen einer definierten mechanischen Spannung in dem Filterkuchen anlegbar ist. Weiterhin kann die Filteroberfläche unterteilt und mit konkaver Oberfläche gestaltet werden. Die Vorrichtung ist insbesondere zur Durchführung des vorbeschriebenen Verfahrens einsetzbar. Entsprechend der vorbeschriebenen Verfahrensvarianten ergeben sich entsprechende bevorzugte Ausführungsformen der erfindungsgemäßen Vorrichtung. Mit der erfindungsgemäßen Vorrichtung können die vorbeschriebenen Vorteile erreicht werden.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine ausschnittsweise Draufsicht auf einen Filterkuchen mit Rissen;
- Figuren 2a bis 2c: Steganordnungen auf einem Filtermedium;
- Fig. 3: einen schematischen Teilquerschnitt durch ein Filtermedium mit Vertiefung;
- Figuren 4a und 4b: schematische Teilquerschnittsansichten durch ein erfindungsgemäßes Kraftübertragungselement;
- Figuren 5a und 5b: Teilansichten zu einem erfindungsgemäßen Kraftübertragungselement;
- Fig. 6: verschiedene Anordnungsvarianten zu Einprägungen in einem Filterkuchen;
- Fig. 7: eine Teilquerschnittsansicht einer erfindungsgemäßen Vorrichtung;
- Fig. 8: eine Teilquerschnittsansicht zu einer weiteren Vorrichtung nach der Erfindung;
- Fig. 9: zwei Darstellungen zum Partikelgerüst in einem Filterkuchen;
- Figuren 10 und 11: schematische Darstellungen zu einer erfindungsgemäßen Vorrichtung mit Kraftübertragungselement;
- Fig. 12: stark vergrößerte Teilquerschnittsansichten zur Randgestaltung eines bandförmigen Kraftübertragungselementes;
- Fig. 13: schematische Darstellung einer weiteren erfindungsgemäßen Vorrichtung mit Kraftübertragungselement;
- Fig. 14: eine Teilquerschnittsansicht eines Filterkuchens mit teilweise eingelegtem Bandelement; und
- Fig. 15: eine Teilquerschnittsansicht eines Filterkuchens mit weiterem eingelegten Kraftübertragungselement.

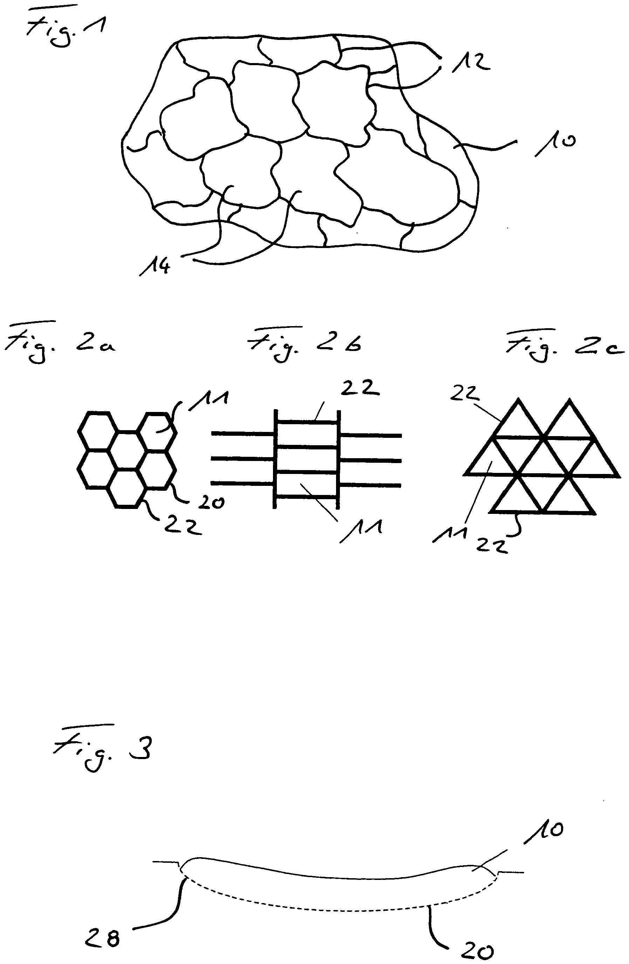

Fig. 1 zeigt eine Draufsicht auf einen kompressiblen Filterkuchen 10 nach einer Entfeuchtung, wobei an der Oberseite des Filterkuchens 10 Risse 12 in einem typischen Rissbild aufgetreten sind. Die Risse 12 umschließen Rissfelder 14, deren durchschnittliche Größe abhängig von der Ausgangssuspension der durchgeführten Filtration und der anschließenden Entfeuchtung charakteristisch ist.

Zur Vermeidung von Rissen 12 ist es vorgesehen, Trennstege 22 auf einem Filtermedium 20 gitterförmig anzuordnen, so dass von den Trennstegen 22 Filterkuchensegmente 11 umschlossen werden, wie in Figur 2 dargestellt. Dabei sind die Filterkuchensegmente 11 derart ausgebildet, dass deren Größe kleiner als die charakteristische Rissfeldgröße des Filterkuchens 10 ist. Auf diese Weise können die Filterkuchensegmente 11 innerhalb der Stege 22 bei einer Entfeuchtung schrumpfen, wobei in der Regel innerhalb der Filterkuchensegmente 11 keine Risse 12 auftreten. Die Trennstege 22 nehmen dabei die beim Schrumpfen auftretenden Zugspannungen auf, so dass sich innerhalb der Filterkuchensegmente 11 die Zugspannungen nicht durch Rissbildung abbauen. Die Trennstege 22 können in bevorzugter Weise wabenförmig (Fig. 2a), kassettenförmig (Fig. 2b) oder dreieckförmig (Fig. 2c) ausgebildet sein.

Gemäß der Erfindung wird eine weitere Verbesserung der Rissfreiheit dahingehend erreicht, dass gemäß Fig. 3 ein Filtermedium 20 mit konkaven Vertiefungen 28 ausgebildet ist. Dies kann alleine oder in Kombination mit der vorbeschriebenen Segmentierung des Filtermediums 20 erfolgen. Entstehende Spannungen in der Oberfläche des Filterkuchens 10 können dabei so beeinflusst werden, dass sich an der Oberseite beim Austreiben der Mutterflüssigkeit aus dem Haufwerk entstehende Zugspannungen und Lücken kompensiert werden und so einer Rissbildung vorgebeugt wird.

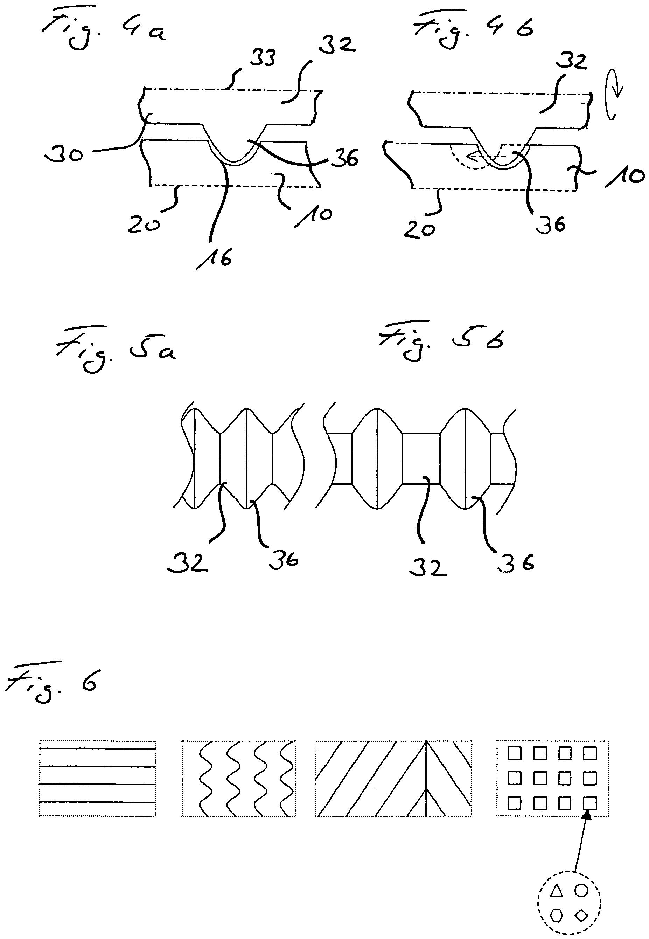

Ein erfindungsgemäßes Kraftübertragungselement 30 ist schematisch in den Figuren 4a und 4b gezeigt. Das Kraftübertragungselement 30 ist dabei als eine zylindrische Walze 32 ausgebildet, welche um eine Drehachse 33 drehbar gelagert und angetrieben ist. An der Außenseite der Walze 32 sind Vorsprünge 36 angeordnet, welche in die Oberseite des Filterkuchens 10 eingedrückt werden, wobei definierte, örtlich begrenzte Einprägungen 16 ausgeformt werden. Diese Einprägungen 16 bilden innerhalb des Filterkuchens 10 Bereiche mit einer Vorspannung aus, welche beim Entfeuchten des Filterkuchens 10 den dabei auftretenden Zugspannungen, welche letztendlich zu den Rissen führen, im Filterkuchen 10 entgegenwirken.

Gemäß Fig. 4b kann die Walze 32 neben einer Drehbewegung auch mit einer Axialbewegung, welche durch einen Pfeil dargestellt ist, versehen werden, wobei neben den Druckspannungen im Filterkuchen 10 auch Scherspannungen parallel zum Filtermedium 20 erzeugt werden.

Neben der Gestaltung der Vorsprünge 36 als einzelne Noppen an der Walze 32 können auch ringförmige Vorsprünge 36 an den Walzen 32 ausgebildet werden, welche schematisch in den Figuren 5a und 5b dargestellt sind. Entsprechende noppenförmige Vorsprünge oder Stege können nicht nur an Walzen 32 sondern auch an bandförmigen Kraftübertragungselementen 30 angeordnet sein.

Abhängig von der Gestaltung der Vorsprünge 36 und einer entsprechenden Bewegung zum Filterkuchen 10 können in diesen verschiedenste Muster eingeprägt werden, welche entsprechend den Anordnungsbeispielen von Fig. 6 linienförmig, wellenförmig, fischgrätartig oder rasterförmig mit unterschiedlichsten Rasterkonturen ausgebildet sein können.

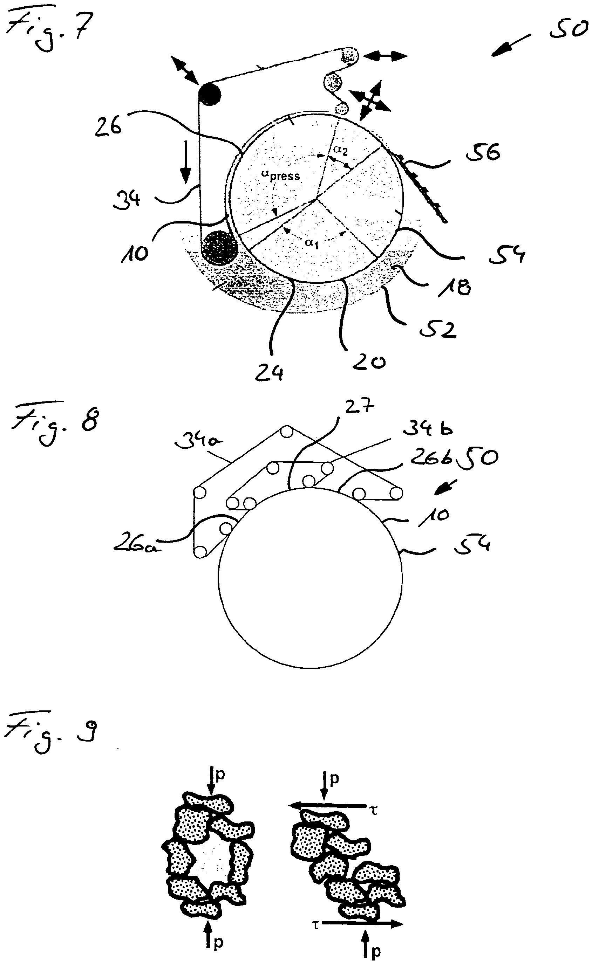

Eine erfindungsgemäße Vorrichtung 50 zur Filtration und Entfeuchtung ist in Fig. 7 dargestellt. Die Vorrichtung 50 weist den grundsätzlichen Aufbau eines Trommelfilters mit einer drehend angetriebenen Trommel 54 auf, welche in einem Filtrationsbereich 24 eine Suspension 18 in einem Suspensionstrog 52 durchläuft. Aufgrund einer anliegenden Druckdifferenz, insbesondere eines Unterdruckes innerhalb der Trommel 54, wird Flüssigkeit durch ein auf der Trommel 54 aufgespanntes Filtermedium 20, insbesondere ein Filtertuch oder eine Filtermembran, hindurchgesogen. Feststoffpartikel innerhalb der Suspension lagern sich dabei an der Außenseite des Filtermediums 20 als ein Haufwerk an, welcher bei Austritt aus der Suspension 18 den Filterkuchen 10 bildet. Im Anschluss an die Filtration wird der Filterkuchen 10 mit einem Entfeuchtungsfluid beaufschlagt, welches ebenfalls aufgrund einer anliegenden Druckdifferenz zum Inneren der Trommel 54 hinstrebt. Durch dieses Entfeuchtungsfluid wird Mutterflüssigkeit zwischen den Feststoffpartikeln des Filterkuchens 10 durch das Filtermedium 20 hindurch ausgetrieben.

Bei der erfindungsgemäßen Vorrichtung 50 ist in dem Entfeuchtungsbereich 26 ein an dem Filterkuchen 10 anliegendes und mitlaufendes permeables Band 34 angeordnet. Durch eine Verstellbarkeit der einzelnen Umlenkräder kann ein Anpressdruck des Bandes 34 an den Filterkuchen 10 eingestellt werden, so dass eine definierte Andruckkraft auf den Filterkuchen 10 erzeugt wird. Diese Andruckkraft, welche unmittelbar bei Austritt des Filterkuchens 10 aus der Suspension 18 und noch vor Beaufschlagung mit dem Entfeuchtungsfluid anliegt, werden mechanische Spannungen in dem Filterkuchen 10 erzeugt, welche einer Rissbildung entgegenwirken. Durch das permeable Band 34, welches ebenfalls ein gewebtes Tuch mit Öffnungen oder eine Membran mit durchlässigen Poren sein kann, kann Entfeuchtungsfluid durch das Band 34 hindurch in Richtung zur Filtertrommel 54 durch den Filterkuchen 10 hindurchströmen. Das Band 34 kann ebenfalls Stege oder Vorsprünge aufweisen, wie zuvor im Zusammenhang mit Fig. 2 oder Fig. 4 beschrieben.

Im Anschluss an die Entfeuchtung mittels eines Entfeuchtungsfluides kann vor einer Abnahme 56 des entfeuchteten Filterkuchens 10 noch eine Waschung mit einer Waschflüssigkeit stattfinden.

Gemäß Fig. 8 ist eine abgewandelte erfindungsgemäße Vorrichtung 50 dargestellt, bei welcher ein erstes äußeres permeables Band 34a umläuft und im Entfeuchtungsbereich 26 an der Trommel 54 anliegt. Ein zweites impermeables Band 34b liegt in einem mittleren Anpressbereich 27 an der Rückseite des ersten Bandes 34a an und drückt in diesem Bereich auf den Filterkuchen 10 auf der Trommel 54. Auf diese Weise wird der Entfeuchtungsbereich 26 in einen ersten Entfeuchtungsbereich 26a und einen zweiten Entfeuchtungsbereich 26b geteilt, wobei durch den dazwischenliegenden Anpressbereich 27 eine Zwischenkonsolidierung des Filterkuchens 10 während der Entfeuchtung erfolgt.

Grundsätzlich kann bei den beiden vorbeschriebenen Vorrichtungen 50 das Band 34 mit derselben Umfangsgeschwindigkeit wie die Trommel 54 umlaufen. Es ist auch möglich, eine abweichende Geschwindigkeit zwischen Band 34 und Trommel 54 einzustellen, wobei sich dabei eine Scherspannung parallel zum Filtermedium 20 ergibt, wie anschaulich in Fig. 9 dargestellt ist. Durch diese zum Normaldruck p in der Regel orthogonale Scherspannung wird gezielt eine Verlagerung von Feststoffpartikeln im entfeuchteten Haufwerk bewirkt, wobei größere Freiräume und Kapillare geschlossen und vergleichmäßigt werden können. Hierdurch wird einer Rissbildung durch vorzeitige Entfeuchtung und Entleerung größerer Freiräume und Kapillare im Filterkuchen 10 vorgebeugt.

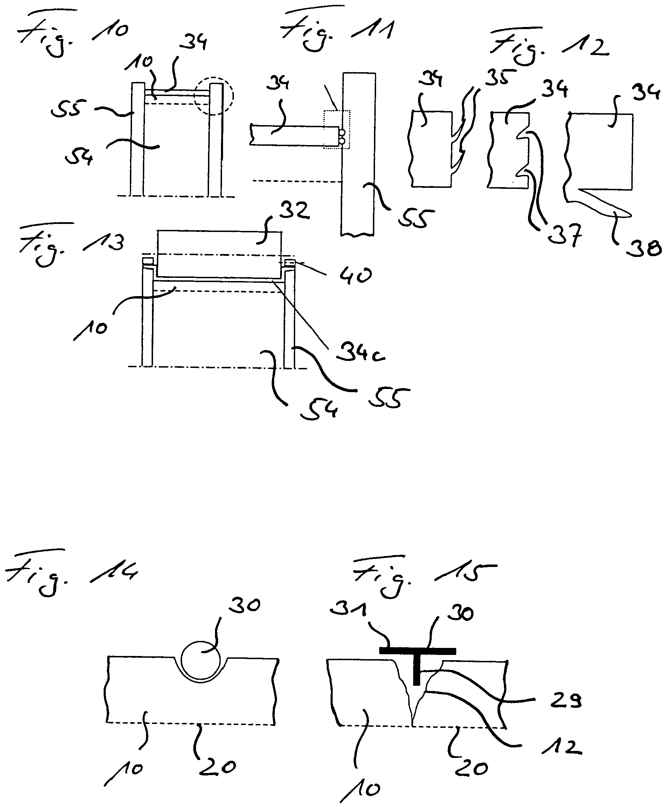

Eine Verbesserung der Entfeuchtung wird nach der Erfindung weiterhin dadurch erreicht, dass gemäß Fig. 10 bei einer Trommel 54 eines Trommelfilters radial vorstehende seitliche Trommelwände 55 angeordnet sind. Bei der Entfeuchtung des Filterkuchens 10 am Umfang der Trommel 54 wird das Band 34 derart angelegt, dass es dichtend an den vorstehenden Trommelwänden 55 anliegt, wie schematisch in Fig. 11 dargestellt ist. Hierzu können entsprechend den Anordnungsbeispielen von Fig. 12 am Rand des Bandes 34 seitlich vorstehende Dichtlippen 35, seitlich eingebrachte Dichtnuten 37 oder eine einzelne unten liegende Dichtlippe 38 vorgesehen sein.

Alternativ kann sich entsprechend der Ausführungsform gemäß Fig. 13 ein Band 34c über die gesamte axiale Länge der Trommel 54 erstrecken und mittels einer Walze 32 radial an einen Filterkuchen 10 an der Trommel 54 angedrückt werden. Zur Vermeidung einer seitlichen Gaseinströmung liegt das Band 34c an den radial vorstehenden Trommelwänden 55 auf und wird zur Abdichtung mittels separater Andruckwalzen 40 an den Umfang der scheibenförmigen Trommelwände 55 angepresst.

Zur gezielten Spannungseinbringung in einen Filterkuchen 10 können gemäß Fig. 14 nach der Erfindung Schnüre oder Bänder als weitere Kraftübertragungselemente 30 in den Filterkuchen 10 eingepresst werden, um definiert Vorspannungen zu erzeugen. Zur Vermeidung einer übermäßigen Entfeuchtungsfluiddurchströmung können gemäß Fig. 15 auch leistenförmige Übertragungselemente 30, insbesondere T-förmige Leisten in den Filterkuchen 10 eingedrückt werden. Hierdurch kann zwar zunächst eine gezielte Rissbildung durch Spannungsspitzen im Filterkuchen 10 durch einen Vertikalsteg 29 hervorgerufen werden. Durch den hierzu ausgebildeten quer liegenden Quersteg 31 wird eine Ausbreitung des Risses 12 parallel zum Filtermedium 20 durch Spannungsaufnahme entgegengewirkt und eine weitere Einströmung von Entfeuchtungsfluid in den Riss 12 verhindert.

## Patentansprüche

1. Verfahren zum Bilden und Entfeuchten eines porösen Filterkuchens (10), bei dem der Filterkuchen (10) aus Feststoffpartikeln aus einer Suspension (18) auf einem Filtermedium (20) gebildet und anschließend der Filterkuchen (10) auf dem Filtermedium (20) auf der vom Filtermedium (20) abgewandten Seite zum Entfernen von Restfeuchte mit einem Entfeuchtungsfluid beaufschlagt wird,
**dadurch gekennzeichnet,**
**dass** vor oder bei Beaufschlagung des Entfeuchtungsfluides in dem Filterkuchen (10) eine definierte mechanische Spannung erzeugt wird, welche einer Rissbildung im Filterkuchen (10) entgegenwirkt.

2. Verfahren nach Anspruch 1,
**dadurch gekennzeichnet,**
**dass** mindestens ein Kraftübertragungselement (30) zur Erzeugung der mechanischen Spannung an den Filterkuchen (10) angelegt wird.

3. Verfahren nach Anspruch 2,
**dadurch gekennzeichnet,**
**dass** als Kraftübertragungselement (30) eine Walze (32) oder ein Band (34) eingesetzt wird.

4. Verfahren nach Anspruch 3,
**dadurch gekennzeichnet,**
**dass** die Walze (32) oder das Band (34) Vorsprünge (36) aufweist, durch welche Einprägungen (16) in dem Filterkuchen (10) erzeugt werden.

5. Verfahren nach einem der Ansprüche 1 bis 4,
**dadurch gekennzeichnet,**
**dass** das Filtermedium (20) bewegt wird und zumindest einen Filtrationsbereich (24) und einen Entfeuchtungsbereich (26) durchläuft.

6. Verfahren nach Anspruch 5,
**dadurch gekennzeichnet,**
**dass** im Entfeuchtungsbereich (26) das Band (34) an dem Filterkuchen (10) anliegt und zumindest bereichsweise mit dem Filterkuchen (10) mitbewegt wird.

7. Verfahren nach einem der Ansprüche 3 bis 6,
**dadurch gekennzeichnet,**
**dass** die Walze (32) oder das Band (34) zum Erzeugen einer Scherspannung parallel zum Filterkuchen (10) in einem Kontaktbereich zum Filterkuchen (10) mit einer vom Filterkuchen (10) abweichenden Geschwindigkeit bewegt werden.

8. Verfahren nach einem der Ansprüche 3 bis 7,
**dadurch gekennzeichnet,**
**dass** der Filterkuchen (10) mit Kraftübertragungselementen, Hochdruckfluid-, und/oder Laserstrahlen eingeschnitten wird.

9. Verfahren nach einem der Ansprüche 3 bis 8,
**dadurch gekennzeichnet,**
**dass** das Band (34) permeabel ausgebildet ist und an der dem Filtermedium (20) abgewandten Seite des Filterkuchens (10) aufgelegt und noch während des Bildens des Filterkuchens (10) in diesem angeordnet wird.

10. Verfahren nach einem der Ansprüche 1 bis 9,
**dadurch gekennzeichnet,**
**dass** das Filtermedium (20) mit Trennstegen (22) und/oder konkaven Vertiefungen (28) versehen wird.

11. Verfahren nach einem der Ansprüche 1 bis 10,
**dadurch gekennzeichnet,**
**dass** der Filterkuchen (10) beim Entfeuchten in Schwingung versetzt wird.

12. Verfahren nach einem der Ansprüche 1 bis 11,
**dadurch gekennzeichnet,**
**dass** der Filterkuchen (10) beim Entfeuchten mit einer Strahlung beaufschlagt wird.

13. Verfahren nach einem der Ansprüche 1 bis 12,
**dadurch gekennzeichnet,**
**dass** der Filterkuchen (10) beim Entfeuchten mit einem magnetischen und/oder elektrischen Feld beaufschlagt wird.

14. Verfahren nach einem der Ansprüche 1 bis 13,
**dadurch gekennzeichnet,**
**dass** beim Bilden des Filterkuchens (10) ein Filterkuchenhilfsstoff zur Spannungsreduzierung beigegeben wird.

15. Vorrichtung zum Durchführen des Verfahrens nach einem der Ansprüche 1 bis 14,
mit einem Filtrationsbereich (24), in welchem ein Filtermedium (10) eine Suspension (18) mit Feststoffpartikeln durchläuft und aufgrund einer anliegenden Druckdifferenz ein Filterkuchen (10) an dem Filtermedium (20) gebildet wird, und einem Entfeuchtungsbereich (26), in welchem der Filterkuchen (10) unter Beaufschlagung eines Entfeuchtungsfluides unter einer anliegenden Druckdifferenz entfeuchtbar ist,
**dadurch gekennzeichnet,**
**dass** das Filter mit einer Einrichtung versehen ist, durch welche im Filterkuchen zumindest lokal Druckspannungen erzeugbar sind.

16. Vorrichtung zum Durchführen des Verfahrens nach einem der Ansprüche 1 bis 14,
mit einem Filtrationsbereich (24), in welchem ein Filtermedium (10) eine Suspension (18) mit Feststoffpartikeln durchläuft und aufgrund einer anliegenden Druckdifferenz ein Filterkuchen (10) an dem Filtermedium (20) gebildet wird, und einem Entfeuchtungsbereich (26), in welchem der Filterkuchen (10) unter Beaufschlagung eines Entfeuchtungsfluides unter einer anliegenden Druckdifferenz entfeuchtbar ist,
**dadurch gekennzeichnet,**
**dass** zumindest ein Kraftübertragungselement (30) vorgesehen ist, welches an oder in den Filterkuchen (10) zum Erzeugen einer definierten mechanischen Spannung in dem Filterkuchen (10) anlegbar ist.

17. Vorrichtung zum Durchführen des Verfahrens nach einem der Ansprüche 1 bis 14,
mit einem Filtrationsbereich (24), in welchem ein Filtermedium (10) eine Suspension (18) mit Feststoffpartikeln durchläuft und aufgrund einer anliegenden Druckdifferenz ein Filterkuchen (10) an dem Filtermedium (20) gebildet wird, und einem Entfeuchtungsbereich (26), in welchem der Filterkuchen (10) unter Beaufschlagung eines Entfeuchtungsfluides unter einer anliegenden Druckdifferenz entfeuchtbar ist,
**dadurch gekennzeichnet,**
**dass** die Filteroberfläche konkav ausgebildet ist.
